# EUROPEAN PATENT APPLICATION

(11) **EP 4 346 321 A1**
(43) Date of publication of application: **03.04.2024**
(21) Application number: 23721821.9
(22) Date of filing: 08.05.2023
(51) Int. Cl.: H04W 76/14, H04W 48/10, H04W 8/00, H04W 4/80, H04W 84/14, H04W 48/16

(54) **ELECTRONIC DEVICE, METHOD, AND NON-TRANSITORY COMPUTER-READABLE STORAGE MEDIUM FOR PERFORMING ADVERTISING PROCESS SYNCHRONIZED WITH ADVERTISING PROCESS IN ANOTHER ELECTRONIC DEVICE**

(30) Priority: 12.08.2022 KR 20220101652; 23.08.2022 KR 20220105676
(71) Applicant: Samsung Electronics Co., Ltd., Suwon-Si, Gyeonggi-do 16677 (KR)
(72) Inventor: CHEONG, Gupil, Suwon-si, Gyeonggi-do 16677 (KR); CHO, Siejoon, Suwon-si, Gyeonggi-do 16677 (KR); KANG, Doosuk, Suwon-si, Gyeonggi-do 16677 (KR); HAN, Euibum, Suwon-si, Gyeonggi-do 16677 (KR)
(74) Representative: Gulde & Partner
(86) International application number: PCT/KR2023/006227
(87) International publication number: WO 2024/034784

(57) **Abstract**

A first electronic device configured to operate as a peripheral device with respect to a central device is provided. The first electronic device includes a communication circuit for Bluetooth. The first electronic device includes a processor. The processor is configured to receive, through the communication circuit, from a second electronic device configured to operate as another peripheral device with respect to the central device, at least one signal indicating an advertising process of the second electronic device to be performed for establishing a connection between the second electronic device and a third electronic device configured to operate as the central device. Various embodiments are possible.

## Description

### [Technical Field]

The following descriptions relate to an electronic device, a method, and a non-transitory computer readable storage medium performing an advertising process synchronized with an advertising process of another electronic device.

### [Background Art]

Compared to legacy Bluetooth^{®} (or classic Bluetooth), Bluetooth^{®} low energy (BLE) can provide reduced power consumption and at least a similar or often greater communication range between connected devices. BLE may be provided on an industrial, scientific, and medical (ISM) radio band.

### [Disclosure]

### [Technical Solution]

According to an embodiment, a first electronic device configured to operate as a peripheral device with respect to a central device is provided. The first electronic device comprises a communication circuit. The first electronic device comprises a processor operably coupled with the communication circuit. The processor is configured to receive, from a second electronic device configured to operate as another peripheral device with respect to the central device, at least one signal indicating an advertising process of the second electronic device to be performed for establishing a connection between the second electronic device and a third electronic device configured to operate as the central device. The processor is configured to identify time resources for an advertising process of the first electronic device to be performed for establishing a connection between the first electronic device and the third electronic device, based on a start timing of the advertising process of the second electronic device indicated by the at least one signal and an advertising interval of the advertising process of the second electronic device. The processor is configured to perform, by using the time resources, the advertising process of the first electronic device through the communication circuit.

According to an embodiment, a method executed in a first electronic device operating as a peripheral device with respect to a central device is provided. The method comprises receiving, from a second electronic device operating as another peripheral device with respect to the central device, at least one signal indicating an advertising process of the second electronic device to be performed for establishing a connection between the second electronic device and a third electronic device operating as the central device. The method comprises identifying time resources for an advertising process of the first electronic device to be performed for establishing a connection between the first electronic device and the third electronic device, based on a start timing of the advertising process of the second electronic device indicated by the at least one signal and an advertising interval of the advertising process of the second electronic device. The method comprises performing, by using the time resources, the advertising process of the first electronic device through the communication circuit.

According to an embodiment, a non-transitory computer readable storage medium storing one or more programs is provided. The one or more programs comprise instructions which cause the electronic device to receive, from a second electronic device configured to operate as another peripheral device with respect to the central device, at least one signal indicating an advertising process of the second electronic device to be performed for establishing a connection between the second electronic device and a third electronic device configured to operate as the central device. The one or more programs comprise instructions which cause the electronic device to identify time resources for an advertising process of the first electronic device to be performed for establishing a connection between the first electronic device and the third electronic device, based on a start timing of the advertising process of the second electronic device indicated by the at least one signal and an advertising interval of the advertising process of the second electronic device. The one or more programs comprise instructions which cause the electronic device to perform, by using the time resources, the advertising process of the first electronic device through the communication circuit.

### [Description of the Drawings]

FIG. 1 illustrates an environment including an exemplary first electronic device, a second electronic device, a third electronic device, and a fourth electronic device.
FIG. 2 is a simplified block diagram of an exemplary first electronic device or a second electronic device.
FIG. 3 illustrates an example of signaling for synchronization performed based on at least one signal transmitted from an exemplary second electronic device.
FIG. 4 illustrates an example of an advertising process of an exemplary first electronic device synchronized with an advertising process of an exemplary second electronic device.
FIG. 5 illustrates an example of signaling caused based on identification of an exemplary fourth electronic device.
FIG. 6 is a block diagram of an electronic device in a network environment according to various embodiments.

### [Mode for Invention]

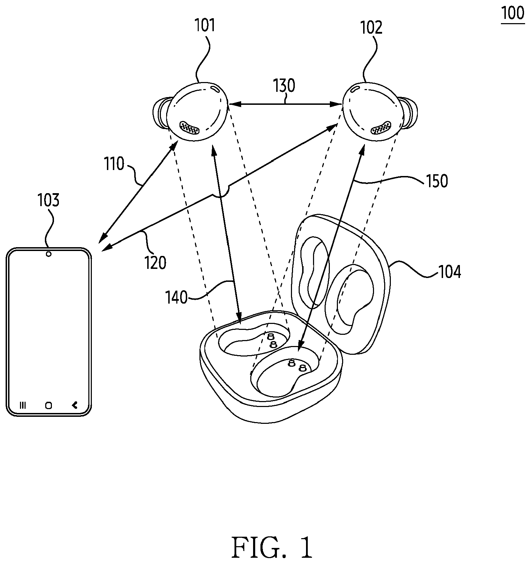

FIG. 1 illustrates an environment including an exemplary first electronic device, a second electronic device, a third electronic device, and a fourth electronic device.

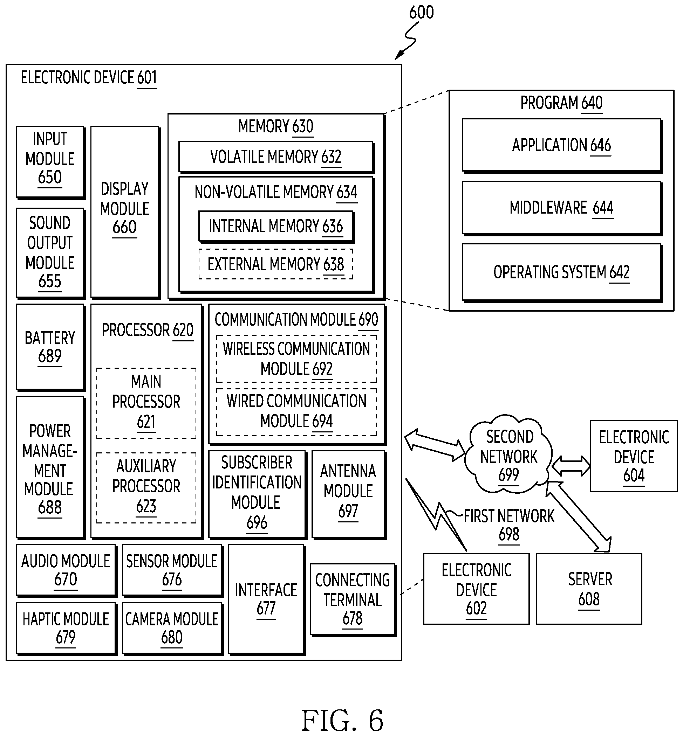

Referring to FIG. 1, an environment 100 may include a first electronic device 101, a second electronic device 102, a third electronic device 103, and a fourth electronic device 104. For example, each of the first electronic device 101, the second electronic device 102, and the fourth electronic device 104 may include at least a portion of an electronic device 602 in FIG. 6. For example, the third electronic device 103 may include at least a portion of an electronic device 601 in FIG. 6.

The first electronic device 101 and the second electronic device 102 in the environment 100 may be audio sink devices such as earbuds or earphones. For example, the first electronic device 101 and the second electronic device 102 may be configured as a pair. However, it is not limited thereto. For example, each of the first electronic device 101 and the second electronic device 102 may receive data on audio from the third electronic device 103 and output, based on the data, the audio through a speaker of each of the first electronic device 101 and the second electronic device 102. For example, the first electronic device 101 and the second external electronic device 202 may receive a request from the third electronic device 103 and transmit, in response to the above request, data on audio obtained through the microphone of the first electronic device 101 and the microphone of the second electronic device 102 to the third electronic device 103, respectively. For example, the data may be usable to play the audio in the third electronic device 103. For example, each of the first electronic device 101 and the second electronic device 102 may be referred to as a peripheral device, a secondary device, or a sub device.

For example, each of the first electronic device 101 and the second electronic device 102 may be stored in the fourth electronic device 104. For example, each of the first electronic device 101 and the second electronic device 102 may include a rechargeable battery. For example, each of the first electronic device 101 and the second electronic device 102 may obtain power to charge the battery from the fourth electronic device 104. For example, each of the first electronic device 101 and the second electronic device 102 may obtain the power from the fourth electronic device 104, while each of the first electronic device 101 and the second electronic device 102 is stored in the fourth electronic device 104.

The third electronic device 103 in the environment 100 may be an audio source device such as a smartphone, a laptop computer, a desktop computer, or a tablet PC. For example, the third electronic device 103 may transmit data on audio being played in the third electronic device 103 to each of the first electronic device 101 and the second electronic device 102. For example, the data may be usable within each of the first electronic device 101 and the second electronic device 102 to output the audio from each of the first electronic device 101 and the second electronic device 102. In an embodiment, the third electronic device 103 may be referred to as a central device, a primary device, or a main device.

The fourth electronic device 104 in the environment 100 may be a device for providing power to each of the first electronic device 101 and the second electronic device 102. For example, the fourth electronic device 104 may provide a space for storing each of the first electronic device 101 and the second electronic device 102. For example, the fourth electronic device 104 may provide a first state (e.g., a case or housing of the fourth electronic device 104 is open) in which at least a portion of the first electronic device 101 and at least a portion of the second electronic device 102 stored in the space are exposed. For example, the fourth electronic device 104 may provide a second state (e.g., the case or housing of the fourth electronic device 104 is closed) in which the first electronic device 101 and the second electronic device 102 stored in the space are covered. For example, the fourth electronic device 104 may provide a third state in which the first electronic device 101 and the second electronic device 102 are spaced apart from the space. However, it is not limited thereto. For example, the fourth electronic device 104 may be referred to as a cradle.

For example, the first electronic device 101 and the third electronic device 103 may establish a connection 110 between the first electronic device 101 and the third electronic device 103 to provide an audio service. For example, the second electronic device 102 and the third electronic device 103 may establish a connection 120 between the second electronic device 102 and the third electronic device 103 to provide the audio service. For example, for the audio service, data provided from the third electronic device 103 to the first electronic device 101 may be synchronized with data provided from the third electronic device 103 to the second electronic device 102. For example, on a condition that the connection 110 and the connection 120 are established, the third electronic device 103 may provide the data to the first electronic device 101 and the second electronic device 102 for the synchronization.

For example, each of the first electronic device 101 and the second electronic device 102 may perform or execute an advertising process to establish each the connection 110 and the connection 120. For example, the first electronic device 101 may broadcast at least one advertising protocol data unit (PDU) of the first electronic device 101 within an advertising process of the first electronic device 101. For example, the third electronic device 103 may establish the connection 110 based on receiving the at least one advertising PDU of the first electronic device 101, using a scan window corresponding to a part of a scan interval of the third electronic device 103. For example, the second electronic device 102 may broadcast at least one advertising PDU of the second electronic device 102 within an advertising process of the second electronic device 102. For example, the third electronic device 103 may establish the connection 120 based on receiving the at least one advertising PDU of the second electronic device 102, using the scan window corresponding to a part of the scan interval of the third electronic device 103.

For example, in case that performing the advertising process of the first electronic device 101 is independent of performing the advertising process of the second electronic device 102, since time resources of the third electronic device 103 used to receive each of the at least one advertising PDU of the first electronic device 101 and the at least one advertising PDU of the second electronic device 102 are parts of the scan interval, a probability that both an establishment of the connection 110 and an establishment of the connection 120 are completed within a certain period of time (e.g., about 1 second) may be less than about 25%. For example, when performing the advertising process of the first electronic device 101 is independent of performing the advertising process of the second electronic device 102, quality or a responsiveness of the audio service may be reduced.

For example, the first electronic device 101 may perform the advertising process of the first electronic device 101 synchronized with the advertising process of the second electronic device 102 to enhance the quality or the responsiveness. For example, the advertising process of the first electronic device 101 synchronized with the advertising process of the second electronic device 102 may indicate the advertising process of the first electronic device 101 identified or obtained based on the advertising process of the second electronic device 102 or the advertising process of the second electronic device 102 identified or obtained based on the advertising process of the first electronic device 101. For example, the advertising process of the first electronic device 101 synchronized with the advertising process of the second electronic device 102 may indicate not only the advertising process of the first electronic device 101 in a time interval completely overlapped with a time interval of the advertising process of the second electronic device 102 but also the advertising process of the first electronic device 101 in a time interval partially overlapped with the time interval of the advertising process of the second electronic device 102. However, it is not limited thereto.

For example, a connection 130 between the first electronic device 101 and the second electronic device 102 may be used for the synchronization between the advertising process of the first electronic device 101 and the advertising process of the second electronic device 102. For example, a connection 140 between the first electronic device 101 and the fourth electronic device 104 and a connection 150 between the second electronic device 102 and the fourth electronic device 104 may be used for the synchronization between the advertising process of the first electronic device 101 and the advertising process of the second electronic device 102.

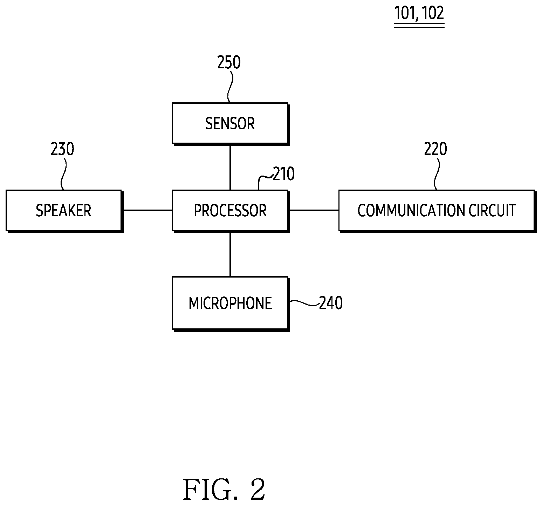

For example, each of the first electronic device 101 and the second electronic device 102 may include components for the synchronization between the advertising process of the first electronic device 101 and the advertising process of the second electronic device 102. The components may be illustrated in FIG. 2.

FIG. 2 is a simplified block diagram of an exemplary first electronic device or a second electronic device.

Referring to FIG. 2, the first electronic device 101 (or the second electronic device 102) may include a processor 210, a communication circuit 220, and a speaker 230. For example, the first electronic device 101 (or the second electronic device 102) may include a microphone 240. For example, the first electronic device 101 (or the second electronic device 102) may include a sensor 250.

For example, the processor 210 may include at least a portion of a processor 620 in FIG. 6. For example, the communication circuit 220 may include at least a portion of a communication module 690 in FIG. 6. For example, the speaker 230 may include at least a portion of a sound output module 655 in FIG. 6. For example, the microphone 240 may include at least a portion of an input module 650 in FIG. 6. For example, the sensor 250 may include at least a portion of a sensor module 176.

For example, the processor 210 may be operably coupled with at least a portion of the components (e.g., the communication circuit 220, the speaker 230, the microphone 240 and/or the sensor 250) of the first electronic device 101 (or the second electronic device 102). For example, the operational coupling of the processor 210 with a component may indicate that the processor 210 controls the component. For example, the operational coupling of the processor 210 with the component may indicate that the processor 210 is connected to the component. For example, the connection may include a direct connection between the processor 210 and the component. For example, the connection may include a connection between the processor 210 and the component through another component. However, it is not limited thereto.

For example, each of the communication circuits 220 of the first electronic device 101 and the second electronic device 102 may be used for the synchronization between the advertising process of the first electronic device 101 and the advertising process of the second electronic device 102. For example, the communication circuit 220 may include a communication circuit for Bluetooth. For example, the communication circuit 220 may include a communication circuit for legacy Bluetooth (or classic Bluetooth) and Bluetooth low energy (BLE). For example, the communication circuit 220 may include a communication circuit for power line communication (PLC). For example, in case that the communication circuit 220 includes the communication circuit for the PLC, the communication circuit 220 may be used to obtain power. Hence, the communication circuit 220 is not restricted to a particular technology such as Bluetooth or PLC.

For example, the speaker 230 may be used to output audio corresponding to data received from third electronic device 103.

For example, the microphone 240 may be used to obtain audio. Data on the audio obtained through the microphone 240 may be transmitted to the third electronic device 103. However, it is not limited thereto.

For example, the sensor 250 may be used to identify a state of the first electronic device 101 (or the second electronic device 102) or a state of an environment including the first electronic device 101 (or the second electronic device 120). For example, the sensor 250 may be used to identify whether an external object is located around the first electronic device 101 (or the second electronic device 102). For example, the sensor 250 may be used to obtain data indicating whether the external object is located within a specified distance from the first electronic device 101 (or the second electronic device 102). For example, the sensor 250 may include a proximity sensor. However, it is not limited thereto.

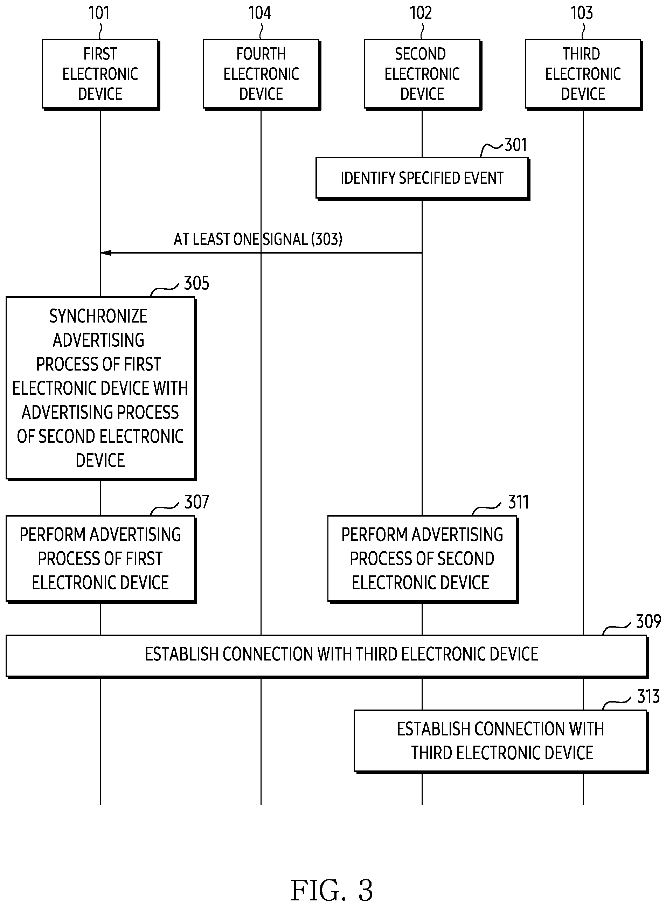

Referring back to FIG. 1, each of the first electronic device 101 and the second electronic device 102 may perform operations for the synchronization between the advertising process of the first electronic device 101 and the advertising process of the second electronic device 102 by using the components of each of the first electronic device 101 and the second electronic device 102. For example, the operations may be executed through signaling between the first electronic device 101 and the second electronic device 102. For example, the operations may be performed through signaling between the first electronic device 101, the second electronic device 102, and the fourth electronic device 104. The signaling may be illustrated in FIG. 3.

FIG. 3 illustrates an example of signaling for synchronization performed based on at least one signal transmitted from an exemplary second electronic device.

Referring to FIG. 3, in operation 301, the second electronic device 102 may identify a specified event. For example, the specified event may be to trigger or initiate the synchronization between the advertising process of the first electronic device 101 and the advertising process of the second electronic device 102.

For example, the specified event may include being changed a state of the fourth electronic device 104 from the second state to the first state. For example, since a state of the fourth electronic device 104 may be changed from the second state to the first state before the user wears the first electronic device 101 and the second electronic device 102, the specified event may include the change from the second state to the first state.

For example, the specified event may include being changed a state of the fourth electronic device 104 from the first state to the third state. For example, since a state of the fourth electronic device 104 may be changed from the first state to the third state before the user wears the first electronic device 101 and the second electronic device 102, the specified event may include the change from the first state to the third state.

For example, the specified event may include being changed a state of the fourth electronic device 104 from the first state to the second state. For example, since the first electronic device 101 and the second electronic device 102 may be booted up according to the change from the first state to the second state, the specified event may include the change from the first state to the second state. For example, since the first electronic device 101 and the second electronic device 102 may obtain power from the electronic device 104 according to the change from the first state to the second state, the specified event may include the change from the first state to the second state.

For example, the specified event may include being changed a state of the fourth electronic device 104 from the third state to the first state. For example, since the first electronic device 101 and the second electronic device 102 may be booted up according to the change from the third state to the first state, the specified event may include the change from the third state to the first state. For example, since the first electronic device 101 and the second electronic device 102 may obtain power from the electronic device 104 according to the change from the third state to the first state, the specified event may include the change from the third state to the first state.

For example, the specified event may include elapsing a specified time from the change from the second state to the first state, elapsing a specified time from the change from the first state to the third state, elapsing a specified time from the change from the first state to the second state, and/or elapsing a specified time from the change from the third state to the first state. For example, the specified event may include a specified period. For example, the specified event may include that the remaining amount of a battery in the first electronic device 101 and/or the second electronic device 102 is greater than or equal to the reference capacity. However, it is not limited thereto.

For example, the specified event may include a contact of an external object (e.g., part of the user's body (e.g., hand)) with the first electronic device 101 and/or the second electronic device 102 after the first state is provided. For example, the specified event may include elapsing a specified time after the contact. However, it is not limited thereto. For example, another specified time longer than the specified time may be defined within the first electronic device 101 and/or the second electronic device 102 with respect to the contact. For example, in response to the contact maintained for the other specified time, the first electronic device 101 (or the second electronic device 102) may perform an operation to create or set a pair with the second electronic device 102 (or the first electronic device 101). For example, the operation may include receiving information about the second electronic device 102 (or the first electronic device 101) from the second electronic device 102 (or the first electronic device 101) so that the first electronic device 101 (or the second electronic device 102) creates the pair. However, it is not limited thereto.

The following examples describe that the advertising process of the first electronic device 101 and the advertising process of the second electronic device 102 are synchronized based on the identification of the specified event, but this is for convenience of explanation. For example, the advertising process of the first electronic device 101 and the advertising process of the second electronic device 102 may not be synchronized in response to the specified event. However, it is not limited thereto.

For example, the identification of the specified event may be performed through various methods.

For example, the second electronic device 102 may identify the specified event through a sensor (e.g., the sensor 250) of the second electronic device 102. For example, the second electronic device 102 may identify the specified event without assistance from another electronic device (e.g., the first electronic device 101 and/or the fourth electronic device 104).

Although not illustrated in FIG. 3, the second electronic device 102 may identify the specified event based on data received from the fourth electronic device 104. For example, the fourth electronic device 104 may identify the specified event. In response to the identification, the fourth electronic device 104 may transmit data indicating the specified event to the second electronic device 102 through the connection 150. The second electronic device 102 may identify the specified event by receiving the data from the fourth electronic device 104. For example, the connection 150 may be a connection through legacy Bluetooth, a connection through BLE, or a connection through PLC. However, it is not limited thereto.

Although not illustrated in FIG. 3, the second electronic device 102 may identify the specified event based on power obtained from the fourth electronic device 104. For example, the fourth electronic device 104 may identify the specified event. The fourth electronic device 104 may provide power indicating the specified event to the second electronic device 102 in response to the identification. The second electronic device 102 may identify the specified event by obtaining the power from the fourth electronic device 104. However, it is not limited thereto.

Although not illustrated in FIG. 3, the second electronic device 102 may identify the specified event based on data received from the first electronic device 101. For example, the first electronic device 101 may identify the specified event. The first electronic device 101 may transmit data indicating the specified event to the second electronic device 102 through the connection 130. The second electronic device 102 may identify the specified event by receiving the data from the first electronic device 101. For example, the connection 130 may be a connection through legacy Bluetooth or a connection through BLE. However, it is not limited thereto.

In operation 303, the second electronic device 102 may transmit to the first electronic device 101 at least one signal indicating the advertising process of the second electronic device 102 to be performed for establish the connection 120.

For example, the at least one signal may be obtained and transmitted to the first electronic device 101 for the synchronization between the advertising process of the first electronic device 101 and the advertising process of the second electronic device 102.

For example, the at least one signal may indicate various information on the advertising process of the second electronic device 102.

For example, the at least one signal may indicate a start timing of the advertising process of the second electronic device 102 (or a transmission timing of a first advertising PDU to be broadcasted within the advertising process of the second electronic device 102).

For example, the at least one signal may indicate an advertising interval of the advertising process of the second electronic device 102.

For example, the at least one signal may indicate a delay time interval between the advertising process of the second electronic device 102 and another advertising process of the second electronic device 102. For example, the other advertising process of the second electronic device 102 may be an advertising process of the second electronic device 102 next to the advertising process of the second electronic device 102. For example, the at least one signal may indicate a calculation method used to obtain or identify the delay time interval.

For example, the at least one signal may indicate advertising channels of the second electronic device 102 for the advertising process of the second electronic device 102. For example, the at least one signal may include data indicating each of the advertising channels of the second electronic device 102 or may indicate the order in which the advertising channels of the second electronic device 102 will be used. However, it is not limited thereto.

For example, the at least one signal may indicate a transmit power of each of the advertising PDUs of the second electronic device 102 to be broadcasted within the advertising process of the second electronic device 102.

For example, the at least one signal may indicate types of advertising PDUs of the second electronic device 102 to be broadcasted within the advertising process of the second electronic device 102. For example, the at least one signal may indicate that types of advertising PDUs of the second electronic device 102 are PDUs for an extended advertising (e.g., ADV_EXT_IND broadcasted via primary advertising channels (e.g., channels No. 37, 38, and 39) and AUX_ADV_IND broadcasted via secondary advertising channels (e.g., other channels different from No.37, 38, and 39)).

For example, the at least one signal may indicate data rate of each of advertising PDUs of the second electronic device 102 to be broadcasted within the advertising process of the second electronic device 102.

For example, the at least one signal may indicate advertising data including identification information of the second electronic device 102.

For example, the at least one signal may be provided to the first electronic device 101 through various methods.

For example, the second electronic device 102 may establish a connection 130 with the first electronic device 101 in response to the identification in operation 301. The second electronic device 102 may transmit the at least one signal to the first electronic device 101 through the connection 130. For example, the first electronic device 101 may receive the at least one signal from the second electronic device 102 through the connection 130.

For example, the second electronic device 102 may transmit the at least one signal to the first electronic device 101 through the connection 130 with the first electronic device 101 established before the identification in operation 301. For example, the first electronic device 101 may receive the at least one signal from the second electronic device 102 through the connection 130.

For example, transmitting the at least one signal to the first electronic device 101 by the second electronic device 102 may include transmitting the at least one signal to the first electronic device 101 through the fourth electronic device 104 by the second electronic device 102.

For example, the second electronic device 102 may establish a connection 150 with the fourth electronic device 104 in response to the identification in operation 301. The second electronic device 102 may transmit the at least one signal to the fourth electronic device 104 through the connection 150. For example, the fourth electronic device 104 may transmit the at least one signal received from the second electronic device 102 to the first electronic device 101 through the connection 140. For example, the connection 140 may be established in response to the reception of the at least one signal in the fourth electronic device 104, established before the identification in operation 301, or established before the reception of the at least one signal in the fourth electronic device 104 after the identification in operation 301. However, it is not limited thereto. For example, within this document, transmitting the at least one signal to the first electronic device 101 by the fourth electronic device 104 may include transmitting a signal or data obtained based on the at least one signal obtained from the second electronic device 102 to the first electronic device 101 by the fourth electronic device 104. For example, the first electronic device 101 may receive the at least one signal from the fourth electronic device 104 through the connection 140.

For example, the second electronic device 102 may transmit the at least one signal to the fourth electronic device 104 through the connection 150 with the fourth electronic device 104 established before identification in operation 301. For example, the fourth electronic device 104 may transmit the at least one signal received from the second electronic device 102 to the first electronic device 101 through the connection 140. For example, the connection 140 may be established in response to the reception of the at least one signal from the fourth electronic device 104, established before the identification in operation 301, or established before receiving the at least one signal in the fourth electronic device 104 after the identification in operation 301. However, it is not limited thereto. For example, the first electronic device 101 may receive the at least one signal generated by the second electronic device 102 through the connection 140.

For example, the second electronic device 102 may transmit the at least one signal to the fourth electronic device 104 through a path of power obtained from the fourth electronic device 104. For example, the fourth electronic device 104 may transmit the at least one signal to the first electronic device 101 through a path of power provided to the first electronic device 101. For example, the first electronic device 101 may receive the at least one signal generated by the second electronic device 102 through the path.

In operation 305, the first electronic device 101 may synchronize the advertising process of the first electronic device 101 with the advertising process of the second electronic device 102 based on the at least one signal.

For example, the first electronic device 101 may synchronize the advertising process of the first electronic device 101 with the advertising process of the second electronic device 102 based on information indicated by the at least one signal.

For example, the first electronic device 101 may identify time resources for the advertising process of the first electronic device 101 to be performed for establishing the connection 110, based on a start timing of the advertising process of the second electronic device 102 and the advertising interval of the advertising process of the second electronic device 102, indicated by at least one signal. For example, the first electronic device 101 may identify the time resources by identifying the start timing of the advertising process of the first electronic device 101 based on the start timing of the advertising process of the second electronic device 102. For example, the first electronic device 101 may identify the time resources based on identifying the start timing of the advertising process of the first electronic device 101 as a timing within a specified time from the start timing of the advertising process of the second electronic device 102. For example, the specified time may be to reduce the time for the third electronic device 103 to scan the first electronic device 101 and the second electronic device 102. For example, the start timing of the advertising process of the first electronic device 101 may be a timing after another specified time from the start timing of the advertising process of the second electronic device 102. For example, the other specified time may be shorter than the specified time. For example, the other specified time may be for a transmission timing of the first advertising protocol data unit (PDU) of the first electronic device 101 to be broadcasted within the advertising process of the first electronic device 101 not to overlap a transmission timing of the first advertising PDU of the second electronic device 102 to be broadcasted within the advertising process of the second electronic device 102. For example, the other specified time may be for the transmission timing of the first advertising PDU of the first electronic device 101 spaced apart from the transmission timing of the first advertising PDU of the second electronic device 102. For example, the first electronic device 101 may identify the transmission timing of the first advertising PDU of the first electronic device 101, based on least a part of the transmission timing of the first advertising PDU of the second electronic device 102 and a transmission timing of a connection request from the third electronic device 103 to the second electronic device 102. For example, the first electronic device 101 may identify the time resources, based on identifying a transmission timing of the first advertising PDU of the first electronic device 101 to be broadcasted within the advertising process of the first electronic device 101 in a time interval between the transmission timings of the first advertising PDU of the second electronic device 102 and the second advertising PDU of the second electronic device 102, to be broadcasted within the advertising process of the second electronic device 102.

For example, the first electronic device 101 may identify the time resources based on identifying length of the advertising interval of the advertising process of the first electronic device 101as length corresponding to the length of the advertising interval of the advertising process of the second electronic device 102.

For example, the first electronic device 101 may identify the time resources based on identifying the advertising interval of the advertising process of the first electronic device 101 as a time interval before the start timing of the other advertising process of the second electronic device 102 (e.g., an advertising process of the second electronic device 102 after the advertising process of the second electronic device 102). For example, the first electronic device 101 may identify the time resources, based on identifying the advertising interval of the advertising process of the first electronic device based on a delay time interval between the advertising process of the second electronic device 102 and the other advertising process of the second electronic device 102, indicated by the at least one signal.

For example, the first electronic device 101 may identify the time resources by identifying a transmission timing of each of the first advertising protocol data units (PDUs) (e.g., ADV _EXT_IND) of the first electronic device 101 and a transmission timing of the second advertising PDU (e.g., AUX_ADV_IND) of the first electronic device 101 indicated by each of the first advertising PDUs, based on a transmission timing of each of the first advertising PDUs (e.g., ADV_EXT_IND) of the second electronic device 102 and a transmission timing of the second advertising PDU (e.g., AUX_ADV_IND) of the second electronic device 102 indicated by each of the first advertising PDUs of the second electronic device 102. For example, each of the first advertising PDUs of the second electronic device 102 may indicate a PDU to be broadcasted within the advertising process of the second electronic device 102. For example, the second advertising PDU of the second electronic device 102 may indicate a PDU to be broadcasted within the advertising process of the second electronic device 102. For example, each of the first advertising PDUs of the first electronic device 101 may indicate a PDU to be broadcasted within the advertising process of the first electronic device 101. For example, the second advertising PDU of the first electronic device 101 may indicate a PDU to be broadcasted within the advertising process of the first electronic device 101.

For example, the first advertising PDUs of the first electronic device 101 may be broadcasted from the first electronic device 101 before the second advertising PDU of the second electronic device 102 is broadcasted. For example, the second advertising PDU of the first electronic device 101 may be broadcasted within a specified time from the transmission timing when the second advertising PDU of the second electronic device 102 is broadcasted. For example, the second advertising PDU of the first electronic device 101 may be broadcasted after the second advertising PDU of the second electronic device 102 is broadcasted, and before the other advertising process of the second electronic device 102 is initiated. For example, the second advertising PDU of the first electronic device 101 may be broadcasted based on a transmission timing of the second advertising PDU of the second electronic device 102 and the transmission timing of a connection request transmitted from the third electronic device 103 in response to the second advertising PDU of the second electronic device 102. However, it is not limited thereto.

For example, the first electronic device 101 may identify advertising channels of the first electronic device 101 for the advertising process of the first electronic device 101 based on the advertising channels of the second electronic device 102 for the advertising process of the second electronic device 102, indicated by the at least one signal. For example, the advertising channels of the first electronic device 101 may correspond to the advertising channels of the second electronic device 102. However, it is not limited thereto.

For example, the first electronic device 101 may identify transmit power of each of the advertising protocol data units (PDUs) of the first electronic device 101 to be broadcasted within the advertising process of the first electronic device 101 based on transmit power of each of the PDUs of the second electronic device 102 to be broadcasted within the advertising process of the second electronic device 102, indicated by at least one signal. For example, the transmit power of each of the advertising protocol data units (PDUs) of the first electronic device 101 may correspond to the transmit power of each of the PDUs of the second electronic device 102. For example, the transmit power of each of the advertising PDUs of the first electronic device 101 may be greater than the transmit power of each of the PDUs of the second electronic device 102. For example, when the advertising process of the first electronic device 101 is initiated after the advertising process of the second electronic device 102 is initiated, the first electronic device 101 may identify a transmit power greater than the transmit power of each of the advertising PDUs of the second electronic device 102 as the transmit power of each of the advertising PDUs of the first electronic device 101, in order to increase a probability that the third electronic device 103 scans the first electronic device 101. However, it is not limited thereto.

For example, the first electronic device 101 may identify a type of each of advertising PDUs of the first electronic device 101 to be broadcasted within the advertising process of the first electronic device 101 based on a type of each of advertising PDUs of the second electronic device 102 to be broadcasted within the advertising process of the second electronic device 102, indicated by at least one signal. For example, the type of each of the advertising PDUs of the first electronic device 101 may correspond to the type of each of the advertising PDUs of the second electronic device 102.

For example, the first electronic device 101 may identify data rate of each of advertising PDU of the first electronic device 101 to be broadcasted within the advertising process of the first electronic device 101 based on data rate of each of advertising PDUs of the second electronic device 102 to be broadcasted within the advertising process of the second electronic device 102, indicated by at least one signal. For example, the data rate of each of the advertising PDUs of the first electronic device 101 may correspond to the data rate of each of the advertising PDUs of the second electronic device 102.

For example, the first electronic device 101 may identify advertising data of the first electronic device 101 provided within the advertising process of the first electronic device 101 based on advertising data of the second electronic device 102 provided within the advertising process of the second electronic device 102, indicated by the at least one signal. For example, the advertising data of the first electronic device 101 may correspond to the advertising data of the second electronic device 102.

Although not illustrated in FIG. 3, the first electronic device 101 may transmit a signal to the second electronic device 102 indicating that the advertising process of the first electronic device 101 is synchronized with the advertising process of the second electronic device 102, according to the at least one signal. For example, the signal may include an acknowledgement signal for the at least one signal.

Although not illustrated in FIG. 3, based on the at least one signal, the first electronic device 101 may negotiate with the second electronic device 102 to synchronize the advertising process of the first electronic device 101 with the advertising process of the second electronic device 102. For example, when the first electronic device 101 cannot perform the advertising process of the first electronic device 101 according to the advertising process of the second electronic device 102, indicated by the at least one signal, the first electronic device 101 may transmit at least one another signal indicating the advertising process of the first electronic device 101 to the second electronic device 102.

For example, the at least one other signal may be transmitted from the first electronic device 101 to the second electronic device 102 through various methods of the at least one signal illustrated in operation 303. However, it is not limited thereto.

For example, the at least one other signal may indicate, with respect to the advertising process of the first electronic device 101, information such as information, indicated by the at least one signal, illustrated in operation 303. However, it is not limited thereto.

For example, the second electronic device 102 may receive the at least one other signal from the first electronic device 101. For example, the second electronic device 102 may adjust the advertising process of the second electronic device 102 based on the at least one other signal. For example, the second electronic device 102 may transmit a signal to the first electronic device 101 indicating that the advertising process of the second electronic device 102 is synchronized with the advertising process of the first electronic device 101, according to the at least one other signal. For example, the signal may include an acknowledgement signal with respect to the at least one signal.

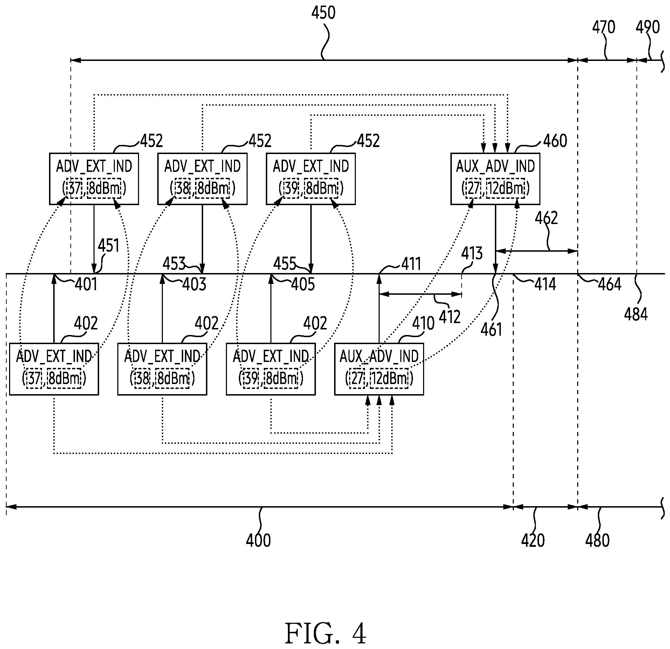

In operation 307, the first electronic device 101 may perform the advertising process of the first electronic device 101 synchronized with the advertising process of the second electronic device 102. For example, the first electronic device 101 may broadcast advertising PDUs of the first electronic device 101 within the advertising process of the first electronic device 101 for establishing a connection 110 with the third electronic device 103. For example, a transmission timing of each of the advertising PDUs of the first electronic device 101 may be synchronized with a transmission timing of each of the advertising PDUs of the second electronic device 102 broadcasted within the advertising process of the second electronic device 102. For example, the synchronization between the transmission timing of each of the advertising PDUs of the first electronic device 101 and the transmission timing of each of the advertising PDUs of the second electronic device 102 will be illustrated in FIG. 4.

In operation 309, the first electronic device 101 may establish a connection 110 with the third electronic device 103 based on the advertising process of the first electronic device 101 performed in operation 307. For example, the first electronic device 101 may receive a connection request transmitted from the third electronic device 103 in response to at least a part of the advertising PDUs of the first electronic device 101 and establish a connection 110 based on at least a part of the connection request. For example, the first electronic device 101 may establish a connection 110 by transmitting a connection response to the third electronic device 103 based on the connection request.

In operation 311, the second electronic device 102 may perform the advertising process of the second electronic device 102 synchronized with the advertising process of the first electronic device 101. For example, the second electronic device 102 may broadcast the advertising PDUs of the second electronic device 102 for establishing a connection 120 with the third electronic device 103. For example, a transmission timing of each of the advertising PDUs of the second electronic device 102 may be synchronized with a transmission timing of each of the advertising PDUs of the first electronic device 101. Synchronization between the transmission timing of each of the advertising PDUs of the first electronic device 101 and the transmission timing of each of the advertising PDUs of the second electronic device 102 may be illustrated in FIG. 4.

FIG. 4 illustrates an example of an advertising process of an exemplary first electronic device synchronized with an advertising process of an exemplary second electronic device.

Referring to FIG. 4, the second electronic device 102 may perform an advertising process of the second electronic device 102 within the advertising interval 400. For example, the first electronic device 101 may perform the advertising process of the first electronic device 101 within the advertising interval 450 identified based on the advertising interval 400.

For example, the second electronic device 102 may broadcast the first advertising PDU (ADV_EXT_IND) 402 of the second electronic device 102 on channel 37 (e.g., 2402 megahertz (MHz)) at a timing 401 in the advertising interval 400, with transmit power of 8 decibel milliwatt(dBm). For example, the first advertising PDU 402 may indicate a channel number (e.g., channel 27) and timing (e.g., timing offset) (e.g., timing 411) used for broadcasting the second advertising PDU (AUX_ADV_IND) 410 of the second electronic device 102. For example, the second electronic device 102 may broadcast the first advertising PDU 402 at the timing 403 within the advertising interval 400, on channel 38 (e.g., 2426 MHz) with transmit power of 8 dBm. For example, the second electronic device 102 may broadcast the first advertising PDU 402 at the timing 405 within the advertising interval 400, on channel 39 (e.g., 2480 MHz) with transmit power of 8 dBm.

For example, the first electronic device 101 may broadcast the first advertising PDU (ADV_EXT_IND) 452 of the first electronic device 101, on channel 37 corresponding to a channel of the first advertising PDU 402 broadcasted at timing 401, at timing 451 within the advertising interval 450 between timing 401 and timing 403, with a transmit power of 8 dBm corresponding to the transmit power of the first advertising PDU 402. For example, the timing 451 may be identified as a timing within a specified time from timing 401. For example, the first advertising PDU 452 may indicate channel number (e.g., channel 27) and timing (e.g., timing offset) (e.g., timing 461) used for broadcasting the second advertising PDU (AUX_ADV_IND) 460 of the first electronic device 101. For example, timing 461 may be identified based on timing 411. For example, the first electronic device 101 may broadcast the first advertising PDU 452 on channel 38 corresponding to the channel of the first advertising PDU 402 broadcasted at timing 403, at timing 453 within the advertising interval 450 between timing 403 and timing 405, with transmit power of 8 dBm corresponding to the transmit power of the first advertising PDU 402. For example, timing 453 may be identified as a timing within a specified time from timing 403. For example, the first electronic device 101 may broadcast the first advertising PDU 452 on channel 39 corresponding to the channel of the first advertising PDU 402 broadcasted at timing 405, at the timing 455 within the advertising interval 450 after timing 405, with a transmit power of 8 dBm corresponding to the transmit power of the first advertising PDU 402. For example, timing 455 may be identified as a timing within a specified time from timing 405. For example, timing 455 may be between timing 405 and timing 411.

For example, the second electronic device 102 may broadcast the second advertising PDU 410 on channel 27, at the timing 411 (e.g., timing indicated by the first advertising PDU 402) within the advertising interval 400 after timing 455, with transmit power of 12 dBm. For example, the second advertising PDU 410 may include advertising data of the second electronic device 102. For example, the advertising data of the second electronic device 102 may include identification information of the second electronic device 102. For example, the third electronic device 103 may receive the second advertising PDU 410 within the time interval 412 from the timing 411. The third electronic device 103 may transmit a connection request to the second electronic device 102 within the time interval 412, in response to the second advertising PDU 410. The second electronic device 102 may receive the connection request from the third electronic device 103 within the time interval 412. The second electronic device 102 may establish a connection 120 with the third electronic device 103 based on the connection request. For example, the second electronic device 102 may establish a connection 120 based on transmitting a connection response with respect to the connection request to the third electronic device 103.

For example, the first electronic device 101 may broadcast the second advertising PDU 460 on channel 27 corresponding to the channel of the second advertising PDU 410 broadcasted at timing 411, at the timing 461 (e.g., timing indicated by the first advertising PDU 452) within the advertising interval 450 after the time interval 412, with a transmit power of 12 dBm corresponding to the transmit power of the second advertising PDU 410. For example, timing 461 may be a timing within a specified time from time interval 412. For example, the second advertising PDU 460 may include advertising data of the first electronic device 101. For example, the advertising data of the first electronic device 101 may include identification information of the first electronic device 101. For example, the third electronic device 103 may receive the second advertising PDU 460 within the time interval 462 from the timing 461. The third electronic device 103 may transmit a connection request to the first electronic device 101 within the time interval 462 in response to the second advertising PDU 460. The first electronic device 101 may receive the connection request from the third electronic device 103 within the time interval 462. The first electronic device 101 may establish a connection 110 with the third electronic device 103 based on the connection request. For example, the first electronic device 101 may establish a connection 110 based on transmitting a connection response with respect to the connection request, to the third electronic device 103.

For example, the second electronic device 102 may perform another advertising process of the second electronic device 102 after the delay time interval 420 elapses from the end timing of the advertising interval 400. For example, the second electronic device 102 may perform the other advertising process of the second electronic device 102 within the advertising interval 480 initiated from timing 464.

For example, the first electronic device 101 may perform another advertising process of the first electronic device 101 after the delay time interval 470 corresponding to the delay time interval 420 elapses from the end timing of the advertising interval 450. For example, the first electronic device 101 may perform the other advertising process of the first electronic device 101 within the advertising interval 490 initiated from the timing 484.

FIG. 4 illustrates an example in which the second advertising PDU 410 and the second advertising PDU 460 are used, but this is for convenience of explanation. For example, each of the first electronic device 101 and the second electronic device 102 may perform each of the advertising process of the first electronic device 101 and the advertising process of the second electronic device 102, by using each of the third advertising PDUs of the first electronic device 101 (e.g., AUX_CHAIN_IND or AUX_SYNC_IND) and the third advertising PDU of the second electronic device 102, indicated by each of the second advertising PDU 410 and the second advertising PDU 460. For example, each of the first electronic device 101 and the second electronic device 102 may perform each of the advertising process of the first electronic device 101 and the advertising process of the second electronic device 102, by using at least a part of the single type of advertising PDUs. For example, each of the advertising process of the first electronic device 101 and the advertising process of the second electronic device 102 may be synchronized based on at least a part of a connection request transmitted from the third electronic device 103 in response to the at least a part of the single type of advertising PDUs. However, it is not limited thereto.

Referring back to FIG. 3, in operation 313, the second electronic device 102 may establish a connection 120 with the third electronic device 103 based on the advertising process of the second electronic device 102 performed in operation 311. For example, the second electronic device 102 may receive a connection request transmitted from the third electronic device 103 in response to at least a part of the advertising PDUs of the second electronic device 102 and establish a connection 120 based on at least a part of the connection request. For example, the second electronic device 102 may establish the connection 120 by transmitting a connection response to the third electronic device 103 based on the connection request.

FIG. 3 illustrates an example in which operation 313 is executed after operation 309 is executed, but this is for convenience of description. For example, operation 313 may be executed at a time independent of the time at which operation 309 is executed. For example, operation 313 may be executed in parallel with operation 309. For example, operation 309 may be executed after operation 313. However, it is not limited thereto.

FIG. 3 illustrates an example in which operation 313 is executed after operation 307 and operation 309 are executed, but this is for convenience of description. For example, operation 313 may be executed based on operation 311 before operation 307 and/or operation 309 is executed. However, it is not limited thereto.

The operations illustrated through the descriptions of FIGS. 3 and 4 may be executed by a processor (e.g., a processor 210) of each of the first electronic device 101 and the second electronic device 102.

FIG. 3 describes examples in which operations 303 to 305 are executed according to the identification of the specified event, but this is for convenience of explanation. Although not illustrated in FIG. 3, the first electronic device 101 may identify the advertising process of the second electronic device 102 performed together with operation 311 and synchronize the advertising process of the first electronic device 101 with the advertising process of the second electronic device 102 based on the identification. For example, the first electronic device 101 may perform operations 305 and 307 on a condition that the execution of operation 311 of the second electronic device 102 is identified through the communication circuit of the first electronic device 101. However, it is not limited thereto.

As described above, the first electronic device 101 and the second electronic device 102 may reduce a time for establishing both the connection 110 and the connection 120 through the synchronization between the advertising process of the first electronic device 101 and the advertising process of the second electronic device 102. For example, the first electronic device 101 and the second electronic device 102 can enhance the quality and responsiveness of an audio service provided through the first electronic device 101, the second electronic device 102, and the third electronic device 103 through the synchronization.

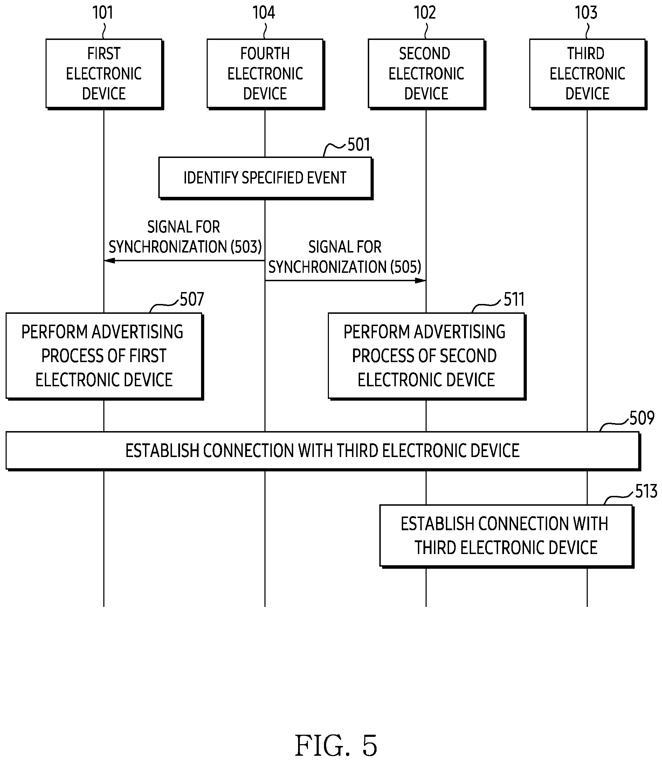

Referring back to FIG. 1, the synchronization between the advertising process of the first electronic device 101 and the advertising process of the second electronic device 102 may be performed through a signal transmitted from the fourth electronic device 104 to the first electronic device 101 and a signal transmitted from the fourth electronic device 104 to the second electronic device 102. For example, the synchronization performed based on the signal transmitted from the fourth electronic device 104 may be illustrated in FIG. 5.

FIG. 5 illustrates an example of signaling caused based on identification of an exemplary fourth electronic device.

Referring to FIG. 5, in operation 501, the fourth electronic device 104 may identify the specified event described through the examples. For example, when the specified event is that a state of the fourth electronic device 104 changes to the first state, the fourth electronic device 104 may identify the specified event based on a change in the state of the switch (or sensor) in the fourth electronic device 104. For example, the switch may include a physical button that is at least partially exposed out of the housing of the fourth electronic device 104. For example, the switch may be configured to identify a touch input in contact with the housing of the fourth electronic device 104. However, it is not limited thereto.

In operation 503, in response to the specified event, the fourth electronic device 104 may transmit a signal for synchronization between the advertising process of the first electronic device 101 and the advertising process of the second electronic device 102 to the first electronic device 101. For example, the signal may be transmitted through the connection 140 or through a path of power provided from the fourth electronic device 104 to the first electronic device 101. For example, the signal may indicate a start timing of the advertising process of the first electronic device 101 (or the second electronic device 102), an advertising interval of the advertising process of the first electronic device 101 (or the second electronic device 102), a delay time interval of the advertising process of the first electronic device 101 (or the second electronic device 102), a type of PDU of the first electronic device 101 (or the second electronic device 102) to be broadcasted within the advertising process of the first electronic device 101 (or the second electronic device 102), data rate of the PDU of the first electronic device 101 (or the second electronic device 102), and/or advertising data of the first electronic device 101 (or the second electronic device 102) to be provided within the advertising process. For example, the first electronic device 101 may receive the signal from the fourth electronic device 104.

In operation 505, in response to the specified event, the fourth electronic device 104 may transmit a signal for synchronization between the advertising process of the first electronic device 101 and the advertising process of the second electronic device 102 to the second electronic device 102. For example, the signal may be transmitted through a connection 150 or through a path of power provided from the fourth electronic device 104 to the second electronic device 102. For example, the signal may indicate a start timing of the advertising process of the second electronic device 102 (or the first electronic device 101), an advertising interval of the advertising process of the second electronic device 102 (or the first electronic device 101), a delay time interval of the advertising process of the second electronic device 102 (or the first electronic device 101), a type of PDU of the second electronic device 102 (or the first electronic device 101) to be broadcasted within the advertising process of the second electronic device 102 (or the first electronic device 101), data rate of the PDU of the second electronic device 102 (or the first electronic device 101), and/or advertising data of the second electronic device 102 (or the first electronic device 101) to be provided within the advertising process. For example, the first electronic device 101 may receive the signal from the fourth electronic device 104.

The signal transmitted through operation 503 and the signal transmitted through operation 505 may be obtained through various methods. For example, the signal transmitted through operation 503 and the signal transmitted through operation 505 may be pre-stored in the fourth electronic device 104 before operation 501 is executed. For example, the signal transmitted through operation 503 and the signal transmitted through operation 505 may be obtained based on a request provided from the first electronic device 101 or the second electronic device 102 to the fourth electronic device 104 before operation 501 is executed. For example, the request may include information indicating the advertising process of the first electronic device 101 and/or information indicating the advertising process of the second electronic device 102. However, it is not limited thereto.

FIG. 5 illustrates an example in which operation 505 is executed after operation 503 is executed, but this is for convenience of description. For example, operation 505 may be executed in parallel with operation 503. For example, operation 503 may be executed after operation 505 is executed. However, it is not limited thereto.

In operation 507, the first electronic device 101 may perform the advertising process of the first electronic device 101 based on the signal received from the fourth electronic device 104. For example, since the advertising process of the first electronic device 101 is performed based on the signal, the advertising process of the first electronic device 101 may be synchronized with the advertising process of the second electronic device 102.

In operation 509, the first electronic device 101 may establish a connection 110 with the third electronic device 103 based on the advertising process of the first electronic device 101. For example, the first electronic device 101 may establish a connection 110 based on at least a part of a connection request received from the third electronic device 103 in response to the advertising process of the first electronic device 101.

In operation 511, the second electronic device 102 may perform the advertising process of the second electronic device 102 based on the signal received from the fourth electronic device 104. For example, since the advertising process of the second electronic device 102 is performed based on the signal, the advertising process of the second electronic device 102 may be synchronized with the advertising process of the first electronic device 101.

In operation 513, the second electronic device 102 may establish a connection 120 with the third electronic device 103 based on the advertising process of the second electronic device 102. For example, the second electronic device 102 may establish a connection 120 based on at least a part of a connection request received from the third electronic device 103 in response to the advertising process of the second electronic device 102.

FIG. 5 illustrates an example in which operation 513 is executed after operation 507 and operation 509 are executed, but this is for convenience of description. For example, operation 513 may be executed based on operation 511 before operation 507 and/or operation 509 is executed. However, it is not limited thereto.

As described above, the fourth electronic device 104 may synchronize the advertising process of the first electronic device 101 with the advertising process of the second electronic device 102, based on scheduling the advertising process of the first electronic device 101 and the advertising process of the second electronic device 102. For example, the fourth electronic device 104 may enhance the quality and responsiveness of audio services provided through the first electronic device 101, the second electronic device 102, and the third electronic device 103 through the synchronization.

FIG. 6 is a block diagram illustrating an electronic device 601 in a network environment 600 according to various embodiments.

Referring to FIG. 6, the electronic device 601 in the network environment 600 may communicate with an electronic device 602 via a first network 698 (e.g., a short-range wireless communication network), or at least one of an electronic device 604 or a server 608 via a second network 699 (e.g., a long-range wireless communication network). According to an embodiment, the electronic device 601 may communicate with the electronic device 604 via the server 608. According to an embodiment, the electronic device 601 may include a processor 620, memory 630, an input module 650, a sound output module 655, a display module 660, an audio module 670, a sensor module 676, an interface 677, a connecting terminal 678, a haptic module 679, a camera module 680, a power management module 688, a battery 689, a communication module 690, a subscriber identification module(SIM) 696, or an antenna module 697. In some embodiments, at least one of the components (e.g., the connecting terminal 678) may be omitted from the electronic device 601, or one or more other components may be added in the electronic device 601. In some embodiments, some of the components (e.g., the sensor module 676, the camera module 680, or the antenna module 697) may be implemented as a single component (e.g., the display module 660).

The processor 620 may execute, for example, software (e.g., a program 640) to control at least one other component (e.g., a hardware or software component) of the electronic device 601 coupled with the processor 620, and may perform various data processing or computation. According to one embodiment, as at least part of the data processing or computation, the processor 620 may store a command or data received from another component (e.g., the sensor module 676 or the communication module 690) in volatile memory 632, process the command or the data stored in the volatile memory 632, and store resulting data in non-volatile memory 634. According to an embodiment, the processor 620 may include a main processor 621 (e.g., a central processing unit (CPU) or an application processor (AP)), or an auxiliary processor 623 (e.g., a graphics processing unit (GPU), a neural processing unit (NPU), an image signal processor (ISP), a sensor hub processor, or a communication processor (CP)) that is operable independently from, or in conjunction with, the main processor 621. For example, when the electronic device 601 includes the main processor 621 and the auxiliary processor 623, the auxiliary processor 623 may be adapted to consume less power than the main processor 621, or to be specific to a specified function. The auxiliary processor 623 may be implemented as separate from, or as part of the main processor 621.

The auxiliary processor 623 may control at least some of functions or states related to at least one component (e.g., the display module 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). According to an embodiment, the auxiliary processor 623 (e.g., an image signal processor or a communication processor) may be implemented as part of another component (e.g., the camera module 680 or the communication module 690) functionally related to the auxiliary processor 623. According to an embodiment, the auxiliary processor 623 (e.g., the neural processing unit) may include a hardware structure specified for artificial intelligence model processing. An artificial intelligence model may be generated by machine learning. Such learning may be performed, e.g., by the electronic device 601 where the artificial intelligence is performed or via a separate server (e.g., the server 608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 630 may store various data used by at least one component (e.g., the processor 620 or the sensor module 676) of the electronic device 601. The various data may include, for example, software (e.g., the program 640) and input data or output data for a command related thereto. The memory 630 may include the volatile memory 632 or the non-volatile memory 634.

The program 640 may be stored in the memory 630 as software, and may include, for example, an operating system (OS) 642, middleware 644, or an application 646.

The input module 650 may receive a command or data to be used by another component (e.g., the processor 620) of the electronic device 601, from the outside (e.g., a user) of the electronic device 601. The input module 650 may include, for example, a microphone, a mouse, a keyboard, a key (e.g., a button), or a digital pen (e.g., a stylus pen).

The sound output module 655 may output sound signals to the outside of the electronic device 601. The sound output module 655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 660 may visually provide information to the outside (e.g., a user) of the electronic device 601. The display module 660 may include, for example, a display, a hologram device, or a projector and control circuitry to control a corresponding one of the display, hologram device, and projector. According to an embodiment, the display module 660 may include a touch sensor adapted to detect a touch, or a pressure sensor adapted to measure the intensity of force incurred by the touch.

The audio module 670 may convert a sound into an electrical signal and vice versa. According to an embodiment, the audio module 670 may obtain the sound via the input module 650, or output the sound via the sound output module 655 or a headphone of an external electronic device (e.g., an electronic device 602) directly (e.g., wiredly) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. According to an embodiment, the sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device (e.g., the electronic device 602) directly (e.g., wiredly) or wirelessly. According to an embodiment, the interface 677 may include, for example, a high definition multimedia interface (HDMI), a universal serial bus (USB) interface, a secure digital (SD) card interface, or an audio interface.

A connecting terminal 678 may include a connector via which the electronic device 601 may be physically connected with the external electronic device (e.g., the electronic device 602). According to an embodiment, the connecting terminal 678 may include, for example, a HDMI connector, a USB connector, a SD card connector, or an audio connector (e.g., a headphone connector).

The haptic module 679 may convert an electrical signal into a mechanical stimulus (e.g., a vibration or a movement) or electrical stimulus which may be recognized by a user via his tactile sensation or kinesthetic sensation. According to an embodiment, the haptic module 679 may include, for example, a motor, a piezoelectric element, or an electric stimulator.

The camera module 680 may capture a still image or moving images. According to an embodiment, the camera module 680 may include one or more lenses, image sensors, image signal processors, or flashes.

The power management module 688 may manage power supplied to the electronic device 601. According to one embodiment, the power management module 688 may be implemented as at least part of, for example, a power management integrated circuit (PMIC).

The battery 689 may supply power to at least one component of the electronic device 601. According to an embodiment, the battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the application processor (AP)) and supports a direct (e.g., wired) communication or a wireless communication. According to an embodiment, the communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as Bluetooth^{™}, wireless-fidelity (Wi-Fi) direct, or infrared data association (IrDA)) or the second network 699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The wireless communication module 692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 692 may support a high-frequency band (e.g., the mmWave band) to achieve, e.g., a high data transmission rate. The wireless communication module 692 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 692 may support various requirements specified in the electronic device 601, an external electronic device (e.g., the electronic device 604), or a network system (e.g., the second network 699). According to an embodiment, the wireless communication module 692 may support a peak data rate (e.g., 20Gbps or more) for implementing eMBB, loss coverage (e.g., 664dB or less) for implementing mMTC, or U-plane latency (e.g., 0.5ms or less for each of downlink (DL) and uplink (UL), or a round trip of 6ms or less) for implementing URLLC.

The antenna module 697 may transmit or receive a signal or power to or from the outside (e.g., the external electronic device) of the electronic device 601. According to an embodiment, the antenna module 697 may include an antenna including a radiating element composed of a conductive material or a conductive pattern formed in or on a substrate (e.g., a printed circuit board (PCB)). According to an embodiment, the antenna module 697 may include a plurality of antennas (e.g., array antennas). In such a case, at least one antenna appropriate for a communication scheme used in the communication network, such as the first network 698 or the second network 699, may be selected, for example, by the communication module 690 (e.g., the wireless communication module 692) from the plurality of antennas. The signal or the power may then be transmitted or received between the communication module 690 and the external electronic device via the selected at least one antenna. According to an embodiment, another component (e.g., a radio frequency integrated circuit (RFIC)) other than the radiating element may be additionally formed as part of the antenna module 697.

According to various embodiments, the antenna module 697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 601 and the external electronic device 604 via the server 608 coupled with the second network 699. Each of the electronic devices 602 or 604 may be a device of a same type as, or a different type, from the electronic device 601. According to an embodiment, all or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 601. The electronic device 601 may provide the outcome, with or without further processing of the outcome, as at least part of a reply to the request. To that end, a cloud computing, distributed computing, mobile edge computing (MEC), or client-server computing technology may be used, for example. The electronic device 601 may provide ultra low-latency services using, e.g., distributed computing or mobile edge computing. In another embodiment, the external electronic device 604 may include an internet-of-things (IoT) device. The server 608 may be an intelligent server using machine learning and/or a neural network. According to an embodiment, the external electronic device 604 or the server 608 may be included in the second network 699. The electronic device 601 may be applied to intelligent services (e.g., smart home, smart city, smart car, or healthcare) based on 5G communication technology or IoT-related technology.

As described above, a first electronic device 101 operating as a peripheral device with respect to a central device may comprise a communication circuit 220, e.g. for Bluetooth, and a processor 210 operably coupled with the communication circuit 220. According to an embodiment, the processor may be configured to receive, from a second electronic device 102 operating as another peripheral device with respect to the central device, at least one signal indicating an advertising process of the second electronic device 102 to be performed for establishing a connection between the second electronic device 102 and a third electronic device 103, the third electronic device 103 operating as the central device. According to an embodiment, the processor may be configured to identify time resources for an advertising process of the first electronic device 101 to be performed for establishing a connection between the first electronic device 101 and the third electronic device 103, based on a start timing of the advertising process of the second electronic device 102 indicated by the at least one signal and an advertising interval of the advertising process of the second electronic device 102. According to an embodiment, the processor may be configured to perform, by using the time resources, the advertising process of the first electronic device 101 through the communication circuit 220.

According to an embodiment, the processor 210 may be configured to identify the time resources, based on identifying a start timing of the advertising process of the first electronic device 101 as a timing within a specified time from the start timing of the advertising process of the second electronic device 102. This identification of time resources may be combined with another identification of time resources.

According to an embodiment, the processor 210 may be configured to identify the time resources, based on identifying an advertising interval of the advertising process of the first electronic device 101 as a time interval before a start timing of another advertising process of the second electronic device 102 next to the advertising process of the second electronic device 102. This identification of time resources may be combined with another identification of time resources.

According to an embodiment, the processor 210 may be configured to identify the time resources, based on identifying the advertising interval of the advertising process of the first electronic device 101 based on a delay time interval between the advertising process of the second electronic device 102 and the other advertising process of the second electronic device 102, that is indicated by the at least one signal. This identification of time resources may be combined with another identification of time resources.

According to an embodiment, the processor 210 may be configured to identify the time resources, based on identifying length of the advertising interval of the advertising process of the first electronic device 101 as length corresponding to length of the advertising interval of the advertising process of the second electronic device 102. This identification of time resources may be combined with another identification of time resources.

According to an embodiment, the processor 210 may be configured to identify the time resources, based on identifying a transmission timing of a first advertising protocol data unit (PDU) to be broadcasted in the advertising process of the first electronic device 101, in a time interval between transmission timings of a first advertising PDU of the second electronic device 102 and a second advertising PDU of the second electronic device 102 to be broadcasted in the advertising process of the second electronic device 102. This identification of time resources may be combined with another identification of time resources.

According to an embodiment, the processor 210 may be configured to identify advertising channels of the first electronic device 101 for the advertising process of the first electronic device 101, based on advertising channels of the second electronic device 102 for the advertising process of the second electronic device 102, indicated by the at least one signal. According to an embodiment, the processor 210 may be configured to broadcast advertising protocol data units (PDUs) of the first electronic device 101, via the advertising channel of the first electronic device 101, in the advertising process of the first electronic device 101.

According to an embodiment, the processor 210 may be configured to identify transmit power of each of advertising protocol data units (PDUs) of the first electronic device 101 to be broadcasted in the advertising process of the first electronic device 101, based on transmit power of each of advertising PDUs of the second electronic device 102 to be broadcasted in the advertising process of the second electronic device 102, indicated by the at least one signal. According to an embodiment, the processor 210 may be configured to broadcast each of the advertising PDUs of the first electronic device 101 with the identified transmit power in the advertising process of the first electronic device 101.

According to an embodiment, the processor 210 may be configured to identify a type of each of advertising protocol data units (PDUs) of the first electronic device 101 to be broadcasted in the advertising process of the first electronic device 101, based on a type of each of advertising PDUs of the second electronic device 102 to be broadcasted in the advertising process of the second electronic device 102, indicated by the at least one signal. According to an embodiment, the processor 210 may be configured to broadcast each of the advertising PDUs of the first electronic device 101 of the identified type in the advertising process of the first electronic device 101.

According to an embodiment, the processor 210 may be configured to identify data rate of each of advertising protocol data units (PDUs) of the first electronic device 101 to be broadcasted in the advertising process of the first electronic device 101, based on data rate of each of advertising PDUs of the second electronic device 102 to be broadcasted in the advertising process of the second electronic device, indicated by the at least one signal. According to an embodiment, the processor 210 may be configured to broadcast each of the advertising PDUs of the first electronic device 01, based on the identified data rate, in the advertising process of the first electronic device 101.

According to an embodiment, the at least one signal may be transmitted from the second electronic device 102 based on a specified event identified by the second electronic device 102.

According to an embodiment, the at least one signal may be transmitted to the first electronic device 101 through a connection between the first electronic device 101 and the second electronic device 102 established through the communication circuit 220 based on the specified event, from the second electronic device 102.

According to an embodiment, the specified event may include that at least portion of the first electronic device 101 and at least portion of the second electronic device 102 stored in a fourth electronic device 104 for providing power to each of the first electronic device 101 and the second electronic device 102 are exposed.

According to an embodiment, the at least one signal may be transmitted to the first electronic device 101 through the fourth electronic device 104, storing the first electronic device 101 and the second electronic device 102, configured to provide power to each of the first electronic device 101 and the second electronic device 102.

According to an embodiment, the at least one signal may be received by the first electronic device 101 through a path for providing the power by using a power line communication (PLC).

According to an embodiment, the processor 210 may be configured to identify the time resources by identifying a transmission timing each of first advertising protocol data units (PDUs) of the first electronic device to be broadcasted in the advertising process of the first electronic device 101 and a transmission timing of a second advertising PDU of the first electronic device 101, to be broadcasted in the advertising process of the first electronic device 101, indicated by each of the first advertising PDUs of the first electronic device 101, based on a transmission timing of each of the first advertising PDUs of the second electronic device 102 to be broadcasted in the advertising process of the second electronic device 102 and a transmission timing of a second advertising PDU of the second electronic device 102, to be broadcasted in the advertising process of the second electronic device 102, indicated by the first advertising PDUs of the second electronic device 102. According to an embodiment, the first advertising PDUs of the first electronic device 101 may be broadcasted from the first electronic device 101 before the second advertising PDU of the second electronic device 102 is broadcasted. According to an embodiment, the second advertising PDU of the first electronic device 101 may be broadcasted within a specified time from the transmission timing at which the second PDU of the second electronic device 102 is broadcasted.

As described above, a first electronic device 102 operating as a peripheral device with respect to a central device may comprise a communication circuit 220, e.g. for Bluetooth, and a processor 210 operably coupled with the communication circuit 220. The first electronic device 102 may also be referred to as the second electronic device 102, particularly when referring to the preceding paragraphs of the description. According to an embodiment, the processor 210 may be configured to identify a specified event. According to an embodiment, the processor 210 may be configured to, in response to the specified event, obtain at least one signal indicating a start timing and an advertising interval of an advertising process of the first electronic device 102 to be performed for establishing a connection 120 with a third electronic device 103 operating as the central device. According to an embodiment, the processor 210 may be configured to transmit, to a second electronic device 101 operating as another peripheral device with respect to the third electronic device 103, the at least one signal for identifying time resources for an advertising process of the second electronic device 101 to be performed for establishing a connection 110 between the second electronic device 101 and the third electronic device 103. The second electronic device 101 may also be referred to as the first electronic device 101, particularly when referring to the preceding paragraphs of the description. According to an embodiment, the processor 210 may be configured to perform, after the at least one signal is transmitted, the advertising process of the first electronic device 102, based on the start timing and the advertising interval indicated by the at least one signal.

According to an embodiment, the processor 210 may be configured to identify the specified event, based on identifying, while obtaining power from a fourth electronic device 104, that at least portion of the first electronic device 102 and at least portion of the second electronic device 101 stored in the fourth electronic device 104 are exposed. The fourth electronic device 104 may provide a space for storing each of the second electronic device 101 and the first electronic device 102 and may be used for the synchronization between the advertising process of the second electronic device 101 and the advertising process of the first electronic device 102.

According to an embodiment, the specified event may be indicated through the power.

According to an embodiment, the electronic device 102 may further comprise a sensor 250. According to an embodiment, the processor 210 may be configured to identify the specified event through the sensor 250.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 640) including one or more instructions that are stored in a storage medium (e.g., internal memory 636 or external memory 638) that is readable by a machine (e.g., the electronic device 601). For example, a processor (e.g., the processor 620) of the machine (e.g., the electronic device 601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device (101) configured to operate as a peripheral device with respect to a central device, the first electronic device (101) comprising:
a communication circuit (220) for Bluetooth; and
a processor (210), operably coupled with the communication circuit (220), configured to:
receive, from a second electronic device (102) configured to operate as another peripheral device with respect to the central device, at least one signal indicating an advertising process of the second electronic device (102) to be performed for establishing a connection between the second electronic device (102) and a third electronic device (103), the third electronic device (103) to operate as the central device;
identify time resources for an advertising process of the first electronic device (101) to be performed for establishing a connection between the first electronic device (101) and the third electronic device (103), based on a start timing of the advertising process of the second electronic device (102) indicated by the at least one signal and an advertising interval of the advertising process of the second electronic device (102); and
perform, by using the time resources, the advertising process of the first electronic device (101) through the communication circuit (220).

2. The first electronic device (101) of claim 1, wherein the processor (210) is configured to identify the time resources based on at least one of the following:
identifying a start timing of the advertising process of the first electronic device (101) as a timing within a specified time from the start timing of the advertising process of the second electronic device (102),
identifying an advertising interval of the advertising process of the first electronic device (101) as a time interval before a start timing of another advertising process of the second electronic device (102) next to the advertising process of the second electronic device (102),
identifying the advertising interval of the advertising process of the first electronic device (101) based on a delay time interval between the advertising process of the second electronic device (102) and the other advertising process of the second electronic device (102) that is indicated by the at least one signal,
identifying a length of the advertising interval of the advertising process of the first electronic device (101) as length corresponding to length of the advertising interval of the advertising process of the second electronic device (102), and
identifying a transmission timing of a first advertising protocol data unit, PDU (452), to be broadcasted in the advertising process of the first electronic device (101) in a time interval between transmission timings of a first advertising PDU (402) of the second electronic device (102) and a second advertising PDU (410) of the second electronic device (102) to be broadcasted in the advertising process of the second electronic device (102).

3. The first electronic device (101) of any one of the preceding claims, wherein the processor (210) is configured to:
identify advertising channels of the first electronic device (101) for the advertising process of the first electronic device (101), based on advertising channels of the second electronic device (102) for the advertising process of the second electronic device (102), indicated by the at least one signal; and
broadcast advertising protocol data units, PDUs (452), of the first electronic device (101), via the advertising channel of the first electronic device (101), in the advertising process of the first electronic device (101).

4. The first electronic device (101) of any one of the preceding claims, wherein the processor (210) is configured to:
identify a transmit power of each of advertising protocol data units, PDUs (452, 460), of the first electronic device (101) to be broadcasted in the advertising process of the first electronic device (101), based on a transmit power of each of advertising PDUs (402, 410) of the second electronic device (102) to be broadcasted in the advertising process of the second electronic device (102), indicated by the at least one signal; and
broadcast each of the advertising PDUs (452, 460) of the first electronic device (101) with the identified transmit power in the advertising process of the first electronic device (101).

5. The first electronic device (101) of any one of the preceding claims, wherein the processor (210) is configured to:
identify a type of each of advertising protocol data units, PDUs (452, 460), of the first electronic device (101) to be broadcasted in the advertising process of the first electronic device (101), based on a type of each of advertising PDUs (402, 410) of the second electronic device (102) to be broadcasted in the advertising process of the second electronic device (102), indicated by the at least one signal; and
broadcast each of the advertising PDUs (452, 460) of the first electronic device (101) of the identified type in the advertising process of the first electronic device (101).

6. The first electronic device (101) of any one of the preceding claims, wherein the processor (210) is configured to:
identify a data rate of each of advertising protocol data units, PDUs (452, 460), of the first electronic device (101) to be broadcasted in the advertising process of the first electronic device (101), based on a data rate of each of advertising PDUs (402, 410) of the second electronic device (102) to be broadcasted in the advertising process of the second electronic device (102), indicated by the at least one signal; and
broadcast each of the advertising PDUs (452, 460) of the first electronic device (101), based on the identified data rate, in the advertising process of the first electronic device (101).

7. The first electronic device (101) of any one of the preceding claims, wherein the at least one signal is transmitted from the second electronic device (102) based on a specified event identified by the second electronic device (102).

8. The first electronic device (101) of claim 7, wherein the at least one signal is transmitted to the first electronic device (101) through a connection between the first electronic device (101) and the second electronic device (102) established through the communication circuit (220) based on the specified event, from the second electronic device (102).

9. The first electronic device (101) of claim 7 or claim 8, wherein the specified event includes that at least portion of the first electronic device (101) and at least portion of the second electronic device (102) stored in a fourth electronic device (104) for providing power to each of the first electronic device (101) and the second electronic device (102) are exposed.

10. The first electronic device (101) of claim 9, wherein the at least one signal is transmitted to the first electronic device (101) through the fourth electronic device (104), which is configured to store the first electronic device (101) and the second electronic device (102), and to provide power to each of the first electronic device (101) and the second electronic device (102).

11. The first electronic device (101) of claim 8 or claim 9, wherein the at least one signal is received by the first electronic device (101) through a path for providing the power by using a power line communication, PLC.

12. The first electronic device (101) of any one of the preceding claims, wherein the processor (210) is configured to identify the time resources by identifying a transmission timing of each of first advertising protocol data units, PDUs (452), of the first electronic device (101) to be broadcasted in the advertising process of the first electronic device (101) and a transmission timing of a second advertising PDU (460) of the first electronic device (101) to be broadcasted in the advertising process of the first electronic device (101) indicated by each of the first advertising PDUs (452) of the first electronic device (101), based on a transmission timing of each of the first advertising PDUs (402) of the second electronic device (102) to be broadcasted in the advertising process of the second electronic device (102) and a transmission timing of a second advertising PDU (410) of the second electronic device (102) to be broadcasted in the advertising process of the second electronic device (102) indicated by the first advertising PDUs (452) of the second electronic device (102),
wherein the first advertising PDUs (452) of the first electronic device (101) are broadcasted from the first electronic device (101) before the second advertising PDU (410) of the second electronic device (102) is broadcasted, and
wherein the second advertising PDU (460) of the first electronic device (101) is broadcasted within a specified time from the transmission timing at which the second PDU (410) of the second electronic device (102) is broadcasted.

13. A second electronic device (102) configured to operate as a peripheral device with respect to a central device, the second electronic device (102) comprising:
a communication circuit (220) for Bluetooth; and
a processor (210), operably coupled with the communication circuit (220), configured to:
identify a specified event;
in response to the specified event, obtain at least one signal indicating a start timing and an advertising interval of an advertising process of the second electronic device (102) to be performed for establishing a connection (120) with a third electronic device (103) operating as the central device;
transmit, to a first electronic device (101) configured to operate as another peripheral device with respect to the third electronic device (103), the at least one signal for identifying time resources for an advertising process of the first electronic device (101) to be performed for establishing a connection (110) between the first electronic device (101) and the third electronic device (103); and
perform, after the at least one signal is transmitted, the advertising process of the second electronic device (102), based on the start timing and the advertising interval indicated by the at least one signal.

14. The second electronic device (102) of claim 13, wherein the processor (210) is configured to identify the specified event, based on identifying, while obtaining power from a fourth electronic device (104), that at least portion of the second electronic device (102) and at least portion of the first electronic device (101) stored in the fourth electronic device (104) are exposed.

15. The second electronic device (102) of claim 14, wherein the specified event is indicated through the power.
